# NEUE EUROPÄISCHE PATENTSCHRIFT

(11) **EP 1 399 293 B2**
(45) Veröffentlichungstag und Bekanntmachung des Hinweises auf die Entscheidung über den Einspruch: **25.02.2015**
(45) Hinweis auf die Patenterteilung: 11.07.2007
(21) Anmeldenummer: 02743219.4
(22) Anmeldetag: 18.06.2002
(51) Int. Cl.: B23Q 39/02

(54) **WERKZEUGMASCHINE MIT WERKZEUGREVOLVER**
TOOLING MACHINE WITH TOOL TURRET
MACHINE-OUTIL ET TOURELLE PORTE-OUTILS

(30) Priorität: 23.06.2001 DE 10130446
(43) Veröffentlichungstag der Anmeldung: 24.03.2004
(73) Patentinhaber: Sauter Feinmechanik GmbH, D-72555 Metzingen (DE)
(72) Erfinder: SAUTER, Reiner, 72555 Metzingen (DE); SAHM, Detlef, 73669 Lichtenwald (DE)
(74) Vertreter: Bartels & Partner
(86) Internationale Anmeldenummer: PCT/EP2002/006689
(87) Internationale Veröffentlichungsnummer: WO 2003/000459

(56) Entgegenhaltungen:
- GB-A- 1 078 562
- US-A- 1 803 402
- US-A- 4 090 281
- US-A- 5 758 399

## Beschreibung

Die Erfindung betrifft eine Werkzeugmaschine mit Werkzeugrevolver mit einem mit der Werkzeugmaschine verbundenen Gehäuse mit einem elektrischen Antriebsmotor und mit einer Werkzeugscheibe, die relativ zum Gehäuse drehbar gelagert und in wählbaren Winkelstellungen festlegbar ist, sowie Aufnahmen für Bearbeitungswerkzeuge aufweist, wobei mindestens ein rotierendes Bearbeitungswerkzeug über Wellen, die senkrecht zu der Längsachse verlaufen, die die Schwenkachse für die Werkzeugscheibe darstellt, vom Antriebsmotor antreibbar ist, (siehe z.B. US-A-4 090 281).

Durch die DE 40 18 543 C1 ist ein Werkzeugrevolver bekannt mit einem mit einer Werkzeugmaschine zu verbindenden Gehäuse und dieser weist einen elektrischen Antriebsmotor auf sowie eine Werkzeugscheibe, die relativ zum Gehäuse drehbar gelagert und in wählbaren Winkelstellungen verriegelbar ist sowie Aufnahmen für Werkzeuge aufweist, von denen mindestens eine für eine drehbare Lagerung des Werkzeuges ausgebildet ist. Das Bearbeitungswerkzeug ist über Wellen, die durch ein Getriebe miteinander verbunden sind, vom Antriebsmotor antreibbar. Ferner ist eine konzentrisch zur Drehachse der Werkzeugscheibe angeordnete hohle Säule vorgesehen, die mindestens eine Leitung enthält, die in ein für die Übertragung von Energie, Schmierstoff, Kühlmittel, Druckmittel oder Hilfsenergien vorgesehenes System einbezogen ist. Die hohle Säule ist relativ zum Gehäuse unbeweglich und von den mittels des Antriebsmotors antreibbaren Wellen ist die eine Welle in der hohlen Säule angeordnet und mittels des Getriebes mit der anderen Welle verbunden, über die das drehbar gelagerte Werkzeug antreibbar ist, wenn die Aufnahme, in welche dieses Werkzeug eingesetzt ist, in der Arbeitsstellung steht.

Mit dem bekannten Werkzeugrevolver ist eine Lösung geschaffen, die es ermöglicht, in raumsparender, problemloser, einfacher und kostengünstiger Weise die von den Werkzeugmodulen, den Werkzeugen oder auch von der Werkzeugscheibe benötigten Hilfsenergien oder Hilfsmittel diesen zuzuführen. Aufgrund des bekannten Antriebssystems über Wellen und ein Getriebe benötigt jedoch das bekannte Werkzeugantriebskonzept immer noch relativ viel Einbauraum und aufgrund der Vielzahl an Teilen, die auch dem Verschleiß unterliegen, ist die bekannte Lösung entsprechend kostenintensiv bei der Herstellung und ein gewisses Maß an Wartung ist sicherzustellen.

Durch die DE 39 00 443 A1 ist eine winkelschaltbare Baueinheit für Werkzeugmaschinen einschließlich Revolverköpfen bekannt, wobei fest arretierte Drehstähle in Aufnahmen gehalten sind, die mittels eines Elektroantriebes um einen feststehenden Tischteil entlang einer Längsachse schwenkbar angeordnet sind. Bei der bekannten Lösung werden über einen in der Werkzeugscheibe integrierten Elektroantrieb zwei Tischteile des Revolverkopfes schwenkbar um die Längsachse zueinander gelagert, wobei über ein Planetenradgetriebe eine entsprechende Untersetzung für den drehbaren Tischteil möglich ist. Mit der bekannten Lösung ist der Antrieb von rotierenden Bearbeitungswerkzeugen nicht möglich.

Durch die DE 39 04 631 A1 ist eine weitere Revolverkopflösung für Werkzeugmaschinen, insbesondere für Drehmaschinen, bekannt, wobei ein einsetzbares, rotierendes Bearbeitungswerkzeug über ein Getriebe antreibbar ist und die Antriebsachse für das Bearbeitungswerkzeug verläuft parallel zur Hauptantriebsachse für den Revolverkopf in Form einer Werkzeugscheibe selbst. Bei dieser bekannten Lösung sitzt der zentrale Elektroantrieb außerhalb der eigentlichen Tischeinheit der Werkzeugscheibe, so daß ein kompakter Aufbau mit der bekannten Lösung nicht möglich ist. Da darüber hinaus der Elektroantrieb einen großen axialen Abstand zu der von ihm antreibbaren Werkzeugscheibe nebst jeweiligem Bearbeitungswerkzeug einnimmt, sind Ungenauigkeiten in der Ansteuerung der genannten Baukomponenten (Scheibe, Werkzeug) nicht auszuschließen.

Ausgehend von diesem Stand der Technik liegt der Erfindung die Aufgabe zugrunde, unter Beibehalten der Vorteile im Stand der Technik die bekannten Lösungen dahingehend weiter zu verbessern, daß sie zu einem kostengünstig realisierbar sind, daß sie mit einem noch geringeren Bauraum auskommt und daß durch Erhöhung der Funktionssicherheit auch der Wartungsaufwand reduzierbar ist. Eine dahingehende Aufgabe löst eine Werkzeugmaschine mit den Merkmalen des Patentanspruches 1 in seiner Gesamtheit.

Dadurch, daß gemäß dem kennzeichnenden Teil des Patentanspruches 1 der elektrische Antriebsmotor innerhalb der Werkzeugscheibe angeordnet ist und daß die Abtriebswelle des elektrischen Antriebes mit der Antriebswelle des Bearbeitungswerkzeuges fluchtet oder parallel verlaufend angeordnet ist, kommt die erfindungsgemäße Werkzeugmaschine mit Werkzeugrevolver ohne aufwendige, mehrfach umzulenkende Wellen und Getriebeteile aus. Vielmehr ist ein Direktantriebskonzept ermöglicht, bei dem in einer fluchtenden Linie zu der Antriebswelle des Bearbeitungswerkzeuges die Abtriebswelle des elektrischen Antriebes wirken kann. Die Gesamtanordnung, also Antriebsmotor mit den entsprechenden Wellenteilen, läßt sich in einer Baueinheit zusammengefaßt in platzsparender Weise unmittelbar innerhalb der Werkzeugscheibe integrieren, so daß außerhalb derselben kein Bauraum benötigt wird. Mit dem erfindungsgemäßen Werkzeugrevolver lassen sich also "schlank aufbauende" Gehäuseaußenkonstruktionen erreichen, was insbesondere bei dem engen Platzangebot bei Werkzeugmaschinen, die mit einer Vielzahl von verschiedensten Werkzeugen und Werkzeuggruppen ausgerüstet sein können, ein Vorteil ist. Durch die geringe Teilevielfalt ist darüber hinaus der Herstell- und Wartungsaufwand reduziert. Durch das Direktantriebskonzept ist darüber hinaus eine Spielfreiheit gewährleistet, was insgesamt der Bearbeitungsgenauigkeit zugute kommt. Die dahingehenden vorteilhaften Ausgestaltungen ergeben sich auch, wenn die Abtriebswelle mit der Antriebswelle in Parallelanordnung ausgebildet ist. In einem dahingehenden Fall kann dann zwischen den Wellen eine Direktkupplung oder eine Getriebeanordnung, beispielsweise in Form eines Zahnradgetriebes, vorhanden sein, um die Abtriebsleistung des Motors an das Bearbeitungswerkzeug weiterzugeben. Auch in einem dahingehenden Fall baut die erfindungsgemäße Konstruktion ausgesprochen klein und "schlank" auf.

Bei einer besonders bevorzugten Ausführungsform der erfindungsgemäßen Werkzeugmaschine ist der elektrische Antrieb ein bürstenlose Motor, insbesondere ein Asynchron- oder Drehstromsynchronmotor, vorzugsweise ausgebildet als Innenläufermotor, bei dem der mit dem Gehäuse des Motors verbundene Stator mit den Spulenwicklungen den Rotor mit den Magnetteilen umfaßt, der mit der Abtriebswelle des Elektromotors verbunden ist. Dahingehende Elektromotoren sind stufenlos drehzahlregelbar und die Drehzahl ist abhängig von der Frequenz der eingespeisten Versorgung; aber ansonsten im wesentlichen unabhängig von der Belastung, was von besonderem Vorteil ist für den Einsatz bei Bearbeitungswerkzeugen, die bei der Bearbeitung unterschiedlichen Belastungen ausgesetzt sein können. Des weiteren lassen sich mit derartigen Elektomotoren sehr hohe Drehzahlen erreichen, die durchaus zwischen 15.000 U/min und 80.000 U/min liegen können. Die dahingehenden Motoren können unmittelbar für den Antrieb des Bearbeitungswerkzeuges vorgesehen sein und bauen im übrigen sehr klein auf, wobei sie dennoch aufgrund ihrer hohen Drehzahlen ausgesprochen hohe Nennleistungswerte zur Verfügung stellen können.

Bei einer weiteren bevorzugten Ausführungsform der erfindungsgemäßen Werkzeugmaschine ist zwischen der Abtriebswelle des elektrischen Antriebsmotors und der Antriebswelle des Bearbeitungswerkzeuges mindestens ein die Drehzahl des Antriebsmotors reduzierendes Getriebe, vorzugsweise ein ein- oder mehrstufiges Planetengetriebe, vorhanden. Das dahingehende Planetengetriebe erlaubt in platzsparender und funktionssicherer Weise eine deutliche Reduzierung des hohen Drehzahlangebotes des elektrischen Motors, so daß mit der Drehzahlreduzierung über das Planetengetriebe für das jeweilige Bearbeitungswerkzeug eine übliche Bearbeitungsdrehzahl zur Verfügung gestellt werden kann. Vorzugsweise ist dabei vorgesehen, das Antriebsrad des Planetengetriebes von der Abtriebswelle des elektrischen Antriebsmotors anzutreiben, wobei das Antriebsrad wiederum mindestens ein Planetenrad des Getriebes antreibt, das sich jeweils entlang eines feststehenden, ringförmigen Getriebegehäuseteils abwälzt und wobei das jeweilige Planetenrad über einen Mitnahmeteil (Steg) den beim Umlauf des jeweiligen Planetenrades entstehenden Abtrieb an die Antriebswelle des Bearbeitungswerkzeuges weitergibt.

Sofern eine weitere Drehzahlreduzierung vonnöten sein sollte, kann des weiteren in vorteilhafter Weise vorgesehen sein, daß neben dem ersten Planetengetriebe ein weiteres Planetengetriebe vorhanden ist, dessen Antriebsrad vom Abtrieb des ersten Planetengetriebes antreibbar ist und dessen beim Umlauf seines jeweiligen Planetenrades entstehender Abtrieb die Antriebswelle des Bearbeitungswerkzeuges antreibt. Somit können auch sehr hochdrehende Drehstromsynchronmotoren über die beiden Planetengetriebe auf eine Nenndrehzahl zurückgestuft werden, die für den Antrieb eines Bearbeitungswerkzeuges als ideal eingestuft werden kann. Gegebenenfalls durch Hintereinanderanordnung von weiteren Planetengetrieben läßt sich die dahingehende Drehzahl noch weiter reduzieren, je nachdem, welche Bearbeitungsdrehzahl man für das Werkzeug zur Verfügung stellen möchte.

Bei einer bevorzugten Ausführungsform der erfindungsgemäßen Werkzeugmaschine ist zwischen Abtriebswelle des Antriebsmotors oder dem wellenartigen Abtrieb des jeweils zuletzt vor der Antriebswelle des Bearbeitungswerkzeuges angeordneten Planetengetriebes eine Kupplungseinrichtung vorgesehen. Vorzugsweise ist dabei die Kupplungseinrichtung über eine hydraulische Betätigungseinrichtung ansteuerbar, wobei in der gekuppelten oder entkuppelten Stellung für einen Drehantrieb des Bearbeitungswerkzeuges dessen Antriebswelle antreibt bzw. für einen Schwenkvorgang des Bearbeitungswerkzeuges mittels der Werkzeugscheibe diese Welle freigibt. Mit der Kupplungseinrichtung ist es also möglich, in kürzester Zeit das Bearbeitungswerkzeug für einen Schwenkvorgang mit der Werkzeugscheibe und mithin für einen Eintausch eines neuen Werkzeuges freizugeben und dahingehend neu eingewechselte Werkzeuge unmittelbar dann anzutreiben. Mithin gehen die Ein- und Auswechselvorgänge rasch von statten und das jeweils neu eingewechselte Bearbeitungswerkzeug steht unmittelbar für die spanende Bearbeitung zur Verfügung.

Bei einer weiteren besonders bevorzugten Ausführungsform der erfindungsgemäßen Werkzeugmaschine ist der elektrische Antriebsmotor stationär an einer gehäuseseitigen Stütze angeordnet, um die die Werkzeugscheibe mit ihren Aufnahmen verschwenkbar gelagert ist. Die dahingehende Stütze stellt eine Art Drehmomentstütze dar, d.h. die mit den hohen Drehmomenten des Antriebes verbundenen, in sein Gehäuse abgeleiteten Kräfte und gegebenenfalls Vibrationen werden über die Drehmomentstütze in das sonstige Gehäuse abgeleitet. Somit ist der elektrische Antriebsmotor mit seinen sehr hohen Drehzahlen sicher gehäuseseitig aufgenommen und dergestalt für die Abgabe der hohen Drehzahlen sicher "verankert".

Bei einer weiteren bevorzugten Ausführungsform der erfindungsgemäßen Werkzeugmaschine ist der elektrische Antriebsmotor von einer Kühleinrichtung kühlbar, deren Kühlleitungen in der Stütze des Gehäuses verlaufen. Über die dahingehende Kühleinrichtung lassen sich die mit den hohen Antriebsleistungen einhergehenden Wärmemengen sicher beherrschen, so daß die Verarbeitungsgenauigkeit hierdurch nicht beeinträchtigt ist. Vorzugsweise ist dabei ferner vorgesehen, die hydraulischen Versorgungsleitungen für die hydraulische Betätigungseinrichtung zumindest teilweise in der Stütze des Gehäuses verlaufend anzuordnen, ebenso wie die Leitungen für eine Endlagenkontrolle der Kupplungs- und/oder Betätigungseinrichtung. Auf diese Art und Weise lassen sich alle relevanten Versorgungs- und Energieleitungen zielgerichtet über die Stütze in die verschwenkbare Werkzeugscheibe mit ihrem integralen Antriebskonzept einbringen.

im folgenden wird die erfindungsgemäße Werkzeugmaschine anhand einer Ausführungsform nach der Zeichnung näher erläutert. Dabei zeigen in prinzipieller und nicht maßstäblicher Darstellung die
- Fig. 1: teilweise in Ansicht, teilweise im Längsschnitt einen Werkzeugrevolver der Werkzeugmaschine mit einem eingesetzten Bearbeitungswerkzeug;
- Fig.2: die Draufsicht auf ein Planetengetriebe mit einem Antriebs- oder Sonnenrad sowie drei Planetenrädern, die mit ihren Zahnrädern (nicht dargestellt) entlang eines stationär angeordneten Außenumfanges abrollen;
- Fig.3: zwei hintereinander angeordnete, teilweise dargestellte Planetengetriebe, wie sie sich jeweils entlang der Schnittlinie I - I in Fig.2 ergeben.

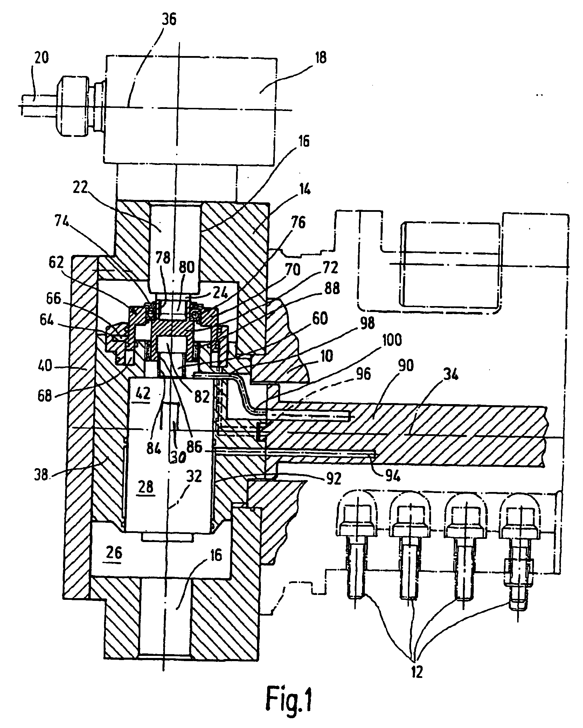

Ein Werkzeugrevolver weist ein Gehäuse 10 auf, das an einer Werkzeugmaschine (nicht dargestellt), beispielsweise einem Schlitten derselben, über eine Schraubverbindung 12 festgelegt ist. Am einen Ende dieses Gehäuses 10 ist eine relativ zu ihm drehbare Werkzeugscheibe 14 (Werkzeugträger) angeordnet, die über ihren Umfang gleichmäßig verteilt angeordnete Aufnahmen 16 für Bearbeitungswerkzeuge 18 aufweist, die in der Art von Werkzeugmodulen aufgebaut ein rotierendes, spanabhebendes Werkzeug 20, beispielsweise in Form eines Bohrers oder Fräsers, aufweisen. Im Ausführungsbeispiel haben die Aufnahmen 16 die Form radial verlaufender Bohrungen. In jede dieser Bohrungen ist ein Schaft 22 des Bearbeitungswerkzeuges einschiebbar, über den eine Antriebswelle 24 übersteht. Der dahingehende Schaft 22 kann außenumfangsseitig mit einer nicht näher dargestellten Festlegeverzahnung versehen sein, so daß dergestalt über ein entsprechendes Gegenstück in der Werkzeugscheibe 14 als Spannvorrichtung sich das Bearbeitungswerkzeug 18 in der Aufnahme 16 jeweils festlegen läßt. Der einfacheren Darstellung wegen wurde in der Fig.1 nur ein eingesetztes modulartiges Bearbeitungswerkzeug 18 dargestellt. Die dahingehende Spannvorrichtung ist beispielsweise in der EP 0 585 600 B1 offenbart, so daß an dieser Stelle hierauf nicht mehr näher eingegangen wird.

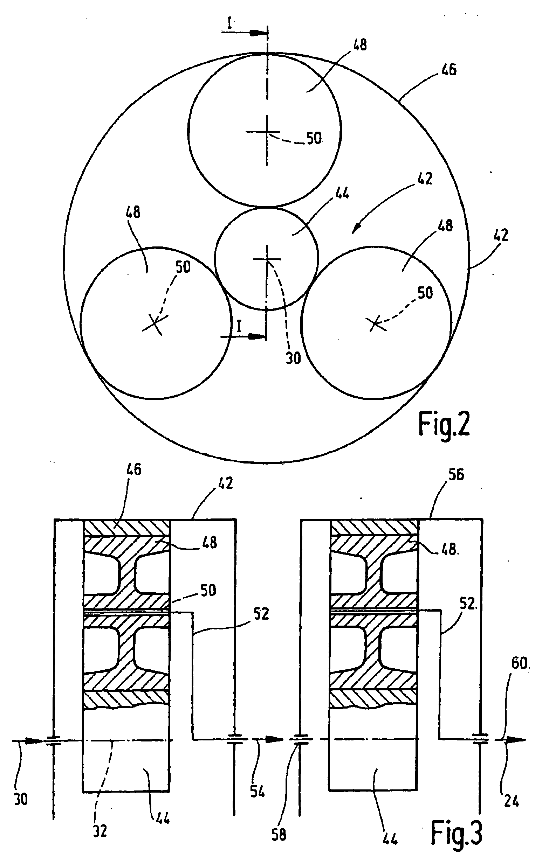

Im Innenraum 26 der Werkzeugscheibe 14 ist ein elektrischer Antriebsmotor 28 angeordnet. Die in der Fig.1 nicht näher dargestellte und in der Fig.3 nur ansatzweise dargestellte Abtriebswelle 30 des Elektromotors 28 fluchtet mit der Antriebswelle 24 entlang einer gemeinsamen Drehachse 32, die senkrecht zu einer Längsachse 34 verläuft, die die Schwenkachse für die Werkzeugscheibe 14 darstellt. Ferner ist die Bearbeitungsachse 36 für das spanende Werkzeug 20 entweder parallel zur Längsachse 34 und senkrecht zur Drehachse 32 angeordnet oder parallel zur Drehachse 32 und senkrecht zur Längsachse 34.

Der Elektromotor 28 ist in einer Motorenaufnahme 38 als Teil des Gehäuses 10 gelagert. Die dahingehende Motorenaufnahme 38 ist stationär angeordnet und die Werkzeugscheibe 14 kann gegenüber dieser Motorenaufnahme 38 eine vorgebbare Schwenkstellung einnehmen. Die Werkzeugscheibe 14 weist an ihrer freien Stirnseite eine Stimabdeckplatte 40 auf, die die Motorenaufnahme 38 nach außen hin abdeckt, wobei bei Abnahme der Platte 40 das innere Antriebskonzept von außen her gut zugänglich ist, was etwaige Wartungs- und Reparaturarbeiten deutlich erleichtert.

Der elektrische Drehstrommotor 28 ist ein Drehstromsynchronmotor mit einer sehr hohen Drehzahl, beispielsweise 15.000 U/min. Der dahingehende Motor ist vorzugsweise ferner als Innenläufermotor ausgebildet, bei dem der nicht näher dargestellte und mit dem Gehäuse des Motors 28 verbundene Stator mit den Spulenwicklungen den nicht näher dargestellten Rotor mit den Magnetteilen umfaßt, der mit der Abtriebswelle 30 des elektrischen Antriebsmotors 28 verbunden ist.

Um die genannte hohe Drehzahl des elektrischen Antriebsmotors 28 in sinnfälliger Weise für das Bearbeitungswerkzeug 18 zu reduzieren, ist zwischen der Abtriebswelle 30 des elektrischen Antriebsmotors 28 und der Antriebswelle 24 des Bearbeitungswerkzeuges 18 ein Reduktionsgetriebe vorhanden, vorzugsweise in Form eines Planetengetriebes 42 (vgl. Fig.2). Das Antriebsrad 44 des Planetengetriebes 42 ist dabei von der Abtriebswelle 30 des elektrischen Antriebsmotors 28 antreibbar (vgl. Fig.3). Hierfür durchgreift die Abtriebswelle 30 das Getriebegehäuse 46 des Planetengetriebes 42 für den Direktantrieb des Antriebsrades 44. Das Antriebsrad 44 treibt wiederum drei Planetenräder 48 an, wobei in der Fig.3 nur das zuoberst dargestellte Planetenrad 48 nach der Fig.2 wiedergegeben ist. Die drei Planetenräder 48 wälzen sich wiederum jeweils entlang des feststehenden ringförmigen Getriebegehäuses 46 ab. Hierfür verfügt das Getriebegehäuse 46 innenumfangsseitig über eine Verzahnung, in die die Zähne der Planetenräder 48 kämmend entsprechend eingreifen können. Ebenso steht das Antriebsrad 44 mit seiner Außenverzahnung in kämmendem Eingriff mit den drei Planetenrädern 48.

Der dahingehende Aufbau von Planetengetrieben ist üblich, so daß an dieser Stelle hierauf nicht mehr näher eingegangen wird und die Funktion des - Planetengetriebes 42 wird nur insofern erläutert, als es für das Verständnis der vorliegenden Erfindung notwendig ist. Die drei Planetenräder 48 verfügen wiederum über Mittenachsen 50, in die ein Mitnahmeteil 52 eingreift, das man in der Fachsprache auch mit Steg bezeichnet. Die drei Mitnahmeteile 52 sind jeweils drehbar in den Mittenachsen 50 geführt und ansonsten zweifach abgekröpft (vgl. Fig.3), um die Umlaufbewegung der Planetenräder 48 an einen gemeinsamen Abtrieb 54 des Planetengetriebes 42 weiterzuleiten. Für die dahingehende Drehmomentabgabe durchgreift der Abtrieb 54 wiederum das Getriebegehäuse 46. Wird nun der dahingehende Abtrieb unmittelbar mit der Antriebswelle 24 des Bearbeitungswerkzeuges 18 verbunden, läßt sich dergestalt beispielsweise die Drehzahl des Antriebsmotors 28 um den Faktor 5 reduzieren, so daß sich 3000 U/min für das Bearbeitungswerkzeug 18 ergeben. Da der Antriebsmotor 28 von seiner Drehzahl her stufenlos regelbar ist, kann also mit der vorgenommenen Drehzahlreduzierung in einem weiten Bereich die Drehzahl des Bearbeitungswerkzeuges 18 vorgegeben werden.

Weist der Elektromotor 28 höhere Drehzahlen auf, die durchaus auch im Bereich von 50.000 U/min bis 80.000 U/min liegen können, kann es vorgesehen sein, das erste Planetengetriebe 42 mit einem weiteren zweiten Planetengetriebe 56 zu koppeln, wie dies in der Fig.3 in prinzipieller Weise dargestellt ist. Dabei wird der Abtrieb 54 des ersten Planetengetriebes 42 auf die Eingangsseite 58 des zweiten Planetengetriebes 56 geführt und dergestalt das Antriebsrad 44 des zweiten Planetengetriebes 56 angetrieben. Dieses zweite Antriebsrad 44 gibt dann wiederum seine Drehbewegung an die Planetenräder 48 des zweiten Getriebes 56 weiter, wobei dann wiederum über die Mitnahmeteile bzw. Stege 52 der weitere Abtrieb 60 auf die Antriebswelle 24 des Bearbeitungswerkzeuges 18 erfolgt. Die in der Fig.3 gezeigte Anordnung läßt sich gegebenenfalls noch durch weitere Hintereinanderanordnung weiterer nicht dargestellter Planetengetriebe ergänzen, so daß dergestalt in definierten Stufen die Drehzahl des Elektromotors 28 reduzierbar ist. Mit den genannten Planetengetrieben 42 und 56 läßt sich in platzsparender Weise eine sehr gute Drehzahlreduktion erreichen; es ist aber auch möglich, hier mit anderen Reduktionsgetrieben die Drehzahl entsprechend zu verringern. Da bei der gezeigten Lösung jedoch alle Wellenteile 30, 54, 60 und 24 miteinander fluchten, und zwar bezogen zur Drehachse 32, ist die Unwuchtproblematik weitgehend vermieden und ein ruhiger und vibrationsfreier Lauf des Antriebskonzeptes ermöglicht.

Wie insbesondere die Fig.1 zeigt, ist zwischen dem wellenartigen Abtrieb 60 und der Antriebswelle 24 des Bearbeitungswerkzeugs 18 eine als Ganzes mit 62 bezeichnete Kupplungseinrichtung 62vorgesehen. Die dahingehende Kupplungseinrichtung 62 ist über eine hydraulische oder pneumatische Betätigungseinrichtung 64 ansteuerbar, wobei in der Fig.1 die gekuppelte Position dargestellt ist. Die Betätigungseinrichtung 64 verfügt über zwei Ringfluidkammern 66 und 68, wobei in der gekuppelten Stellung nach der Fig.1 die untere Fluidkammer 68 mit Druckmedium beaufschlagt ist und die obere Fluidkammer 66 ist im wesentlichen bis auf den Umgebungsdruck drucklos gehalten. In der dahingehenden Druckbeaufschlagungssituation ist die Kupplungsmuffe 70 in ihrer oberen in der Fig.1 gezeigten Position, wobei sie ein Kupplungsteil 72 mitführt, das für den eigentlichen Kupplungsvorgang zuständig ist. Für die dahingehende Mitnahmebewegung der Kupplungsmuffe 70 mit dem Kupplungsteil 72 ist eine Verbindungseinrichtung 74 vorgesehen mit einem Kugel- oder Rollenlager 76. Mittels des dahingehenden Kugellagers 76 ist es möglich, bei stationär angeordneter Kupplungsmuffe 70 das Kupplungsteil 72 drehbar in der Muffe 70 zu lagern. Letzteres ist notwendig, damit das Kupplungsteil 72 die drehende Bewegung von Abtrieb 60 auf die Antriebswelle 24 des Bearbeitungswerkzeuges 18 übertragen kann.

Für die Mitnahme der Antriebswelle 24 des Bearbeitungswerkzeuges 18 weist diese außenumfangsseitig eine Verzahnung 78 auf für einen entsprechenden Verzahnungseingriff mit einer Innenverzahnung des Kupplungsteils 72. Hierfür weist das Kupplungsteil 72 in Blickrichtung auf die Fig.1 gesehen an seiner Oberseite eine Aussparung 80 auf. Eine entsprechende Aussparung 82 ist auch auf der gegenüberliegenden Seite des Kupplungsteils 72 angeordnet, damit die Außenverzahnung 84 in die Innenverzahnung 86 des Kupplungsteils 72 eingreifen kann. Die dahingehende Innenverzahnung 86 ist nur im Bereich des unteren freien Endes des Kupplungsteils 72 angeordnet. Ferner ist die Aussparung 82 in ihrer Bauhöhe derart ausgelegt, daß bei einem Absenken des Kupplungsteils 72 über die Kupplungsmuffe 70 der Abtrieb 60 so lange in die zweite Aussparung 82 einfahren kann, bis über die erste Aussparung 80 die Antriebswelle 24 des Bearbeitungswerkzeuges 18 vollständig freigegeben ist.

Für die dahingehende Absenkbewegung ist dann die Fluidkammer 66 mit Druckmedium zu beaufschlagen und die Fluidkammer 68 bis auf den Umgebungsdruck drucklos zu machen. Die Betätigungseinrichtung 64 drückt dann über die derart mit dem Druckmedium beaufschlagte Kupplungsmuffe 70 das Kupplungsteil 72 von seiner in Blickrichtung auf die Fig.1 gesehen oberen Stellung in seine untere (nicht dargestellt). In dieser unteren Position ist die Antriebswelle 24 des Bearbeitungswerkzeuges 18 dann freigegeben und durch entsprechende Ansteuerung kann die Werkzeugscheibe 14 um ihre Längsachse 34 verschwenkt werden, bis ein anderes, nicht näher dargestelltes Bearbeitungswerkzeug, das in einer anderen Aufnahme 16 angeordnet ist, an die Stelle des gezeigten Bearbeitungswerkzeuges 18 gelangt. Durch Umkehr der Fluidansteuerung für die Kammern 66, 68 läßt sich dann über die Kupplungsmuffe 70 das Kupplungsteil 72 wieder in seine Kupplungsposition verfahren und mit Herstellen der Kupplung läßt sich die Leistung des Motors 28 dann an das Bearbeitungswerkzeug 18 weitergeben. Um einen ungewollten Fluidaustritt zu vermeiden, ist jedenfalls die Kupplungsmuffe nach innen und außen hin entsprechend abgedichtet. Damit das Kupplungsteil 72 sich drehen und dennoch eine axiale Längsverschiebung entlang der Drehachse 32 ausführen kann, ist außenumfangsseitig am Kupplungsteil 72 ein Nadellagerkäfig 88 angeordnet.

Der elektrische Antriebsmotor 28 ist, wie bereits ausgeführt, in einer Motorenaufnahme 38 gehalten, die wiederum mit einer gehäuseseitigen Stütze 90 in der Art einer Drehmomentstütze verbunden ist. Die dahingehende stabartige Stütze 90 trägt also an ihrem einen freien Ende die Motorenaufnahme 38, an deren Oberseite die Kupplungseinrichtung 62 aufgenommen ist, und ist ansonsten insbesondere im Bereich ihres anderen Endes in das Gehäuse 10 integriert. Der elektrische Antriebsmotor 28 ist von einer Kühleinrichtung 92 umgeben, deren Kühlleitungen 94 in der Stütze 90 geführt sind. Über die dahingehende Kühleinrichtung 92 lassen sich die mit den hohen spezifischen Leistungen einhergehenden Wärmemengen sicher aus der Motorenaufnahme 38 und mithin aus der Werkzeugscheibe 14 selbst abführen. Des weiteren sind in der Stütze 90 die Versorgungsleitungen 96 für die Betätigungseinrichtung 64 geführt. Des weiteren ist zur Überwachung der Betätigungssituation für die Kupplungsmuffe 70 bzw. für das Kupplungsteil 72 ein Endlagenschalter 98 vorgesehen, dessen Meldeleitung 100 ebenfalls in der Stütze 90 geführt ist. Mithin werden alle wesentlichen Versorgungs- und Informationsleitungen zentral über die Stütze 90 in das Innere der Werkzeugscheibe 14 geführt.

Mit dem erfindungsgemäßen Werkzeugrevolver steht eine klein aufbauende Antriebslösung zur Verfügung, die über sehr hohe Antriebsleistungen und Antriebsdrehzahlen verfügt. Die dahingehenden Drehzahlen lassen sich unmittelbar an ein Bearbeitungswerkzeug abgeben oder über Getriebestufen entsprechend drehzahlreduzieren. Da alle Antriebswellen in einer gemeinsamen Achse fluchten, sind Unwuchterscheinungen vermieden, was der Bearbeitungsgenauigkeit mit den Bearbeitungswerkzeugen zugute kommt. Durch die Integrierung des Antriebskonzeptes in die Werkzeugscheibe ist insbesondere auf der Gehäuseseite ein schlanker Aufbau erreicht und der in der Werkzeugscheibe zur Verfügung stehende Bauraum gut genutzt.

## Patentansprüche

1. Werkzeugmaschine mit Werkzeugrevolver mit
- einem mit der Werkzeugmaschine zu verbundenen Gehäuse (10),
- einem elektrischen Antriebsmotor (28),
- einer Werkzeugscheibe (14), die relativ zum Gehäuse (10) um eine Längsachse (34) drehbar gelagert und in wählbaren Winkelstellungen festlegbar ist, sowie Aufnahmen (16) für Bearbeitungswerkzeuge (18) aufweist,
- wobei mindestens ein rotierendes Bearbeitungswerkzeug (18) über Wellen (24,30), die senkrecht zu der Längsachse (34) verlaufen, die die Schwenkachse für die Werkzeugscheibe (14) darstellt, vom Antriebsmotor (28) antreibbar ist,
**dadurch gekennzeichnet, daß** der elektrische Antriebsmotor (28) innerhalb der Werkzeugscheibe (14) angeordnet ist und daß die Abtriebswelle (30) des elektrischen Antriebes (28) mit der Antriebswelle (24) des Bearbeitungswerkzeuges (18) fluchtet oder parallel verlaufend angeordnet ist.

2. Werkzeugmaschine nach Anspruch 1, **dadurch gekennzeichnet, daß** der elektrische Antriebsmotor (28) vorzugsweise ein Asynchronmotor oder Drehstromsynchronmotor ist, bevorzugt ausgebildet als Innenläufermotor, bei dem der mit dem Gehäuse (10) des Motors (28) verbundene Stator mit den Spulenwicklungen den Rotor mit den Magnetteilen umfaßt, der mit der Abtriebswelle (30) des elektrischen Antriebsmotors (28) verbunden ist.

3. Werkzeugmaschine nach Anspruch 1 oder 2, **dadurch gekennzeichnet, daß** zwischen der Abtriebswelle (30) des elektrischen Antriebsmotors (28) und der Antriebswelle (24) des Bearbeitungswerkzeuges (18) mindestens ein die Drehzahl des Antriebsmotors (28) reduzierendes Getriebe, vorzugsweise ein ein- oder mehrstufiges Planetengetriebe (42,56), vorhanden ist.

4. Werkzeugmaschine nach Anspruch 3, **dadurch gekennzeichnet, daß** das Antriebsrad (44) des Planetengetriebes (42) von der Abtriebswelle (30) des elektrischen Antriebsmotors (28) antreibbar ist, daß das Antriebsrad (44) mindestens ein Planetenrad (48) antreibt, das sich jeweils entlang eines feststehenden ringförmigen Getriebegehäuses (46) abwälzt und daß das jeweilige Planetenrad (48) über ein Mitnahmeteil (52) den beim Umlauf des jeweiligen Planetenrades (48) entstehenden Abtrieb (54) an die Antriebswelle (24) des Bearbeitungswerkzeuges (18) weitergibt.

5. Werkzeugmaschine nach Anspruch 4, **dadurch gekennzeichnet, daß** ein weiteres Planetengetriebe (56) vorgesehen ist, dessen Antriebsrad (44) vom Abtrieb (54) des ersten Planetengetriebes (42) antreibbar ist und dessen beim Umlauf seines jeweiligen Planetenrades (48) entstehender Abtrieb (60) die Antriebswelle (24) des Bearbeitungswerkzeuges (18) antreibt.

6. Werkzeugmaschine nach einem der Ansprüche 1 bis 5, **dadurch gekennzeichnet, daß** zwischen Abtriebswelle (30) des Antriebsmotors (28) oder dem wellenartigen Abtrieb (54 oder 60) des jeweils zuletzt vor der Antriebswelle (24) des Bearbeitungswerkzeuges (18) angeordneten Planetengetriebes (42 bzw. 56) eine Kupplungseinrichtung (62) vorgesehen ist.

7. Werkzeugmaschine nach Anspruch 6, **dadurch gekennzeichnet, daß** die Kupplungseinrichtung (62) über eine hydraulische oder pneumatische Betätigungseinrichtung (64) ansteuerbar ist und in der gekuppelten oder entkuppelten Stellung für einen Drehantrieb des Bearbeitungswerkzeuges (18) dessen Antriebswelle (24) antreibt bzw. für einen Schwenkvorgang des Bearbeitungswerkzeuges (18) mittels der Werkzeugscheibe (14) diese freigibt.

8. Werkzeugmaschine nach einem der Ansprüche 1 bis 7, **dadurch gekennzeichnet, daß** der elektrische Antriebsmotor (28) stationär an einer gehäuseartigen Stütze (90) angeordnet ist, um die die Werkzeugscheibe (14) mit ihren Aufnahmen (16) verschwenkbar gelagert ist.

9. Werkzeugmaschine nach Anspruch 8, **dadurch gekennzeichnet, daß** der elektrische Antriebsmotor (28) von einer Kühleinrichtung (92) kühlbar ist, deren Kühlleitungen (94) in der Stütze (90) des Gehäuses (10) verlaufen.

10. Werkzeugmaschine nach Anspruch 8 oder 9, **dadurch gekennzeichnet, daß** die Versorgungsleitungen (96) für die Betätigungseinrichtung (64) zumindest teilweise in der Stütze (90) des Gehäuses (10) verlaufen ebenso wie die Leitungen (100) für eine Endlagenkontrolle (98) der Kupplungs -(62) und/oder Betätigungseinrichtung (64).

## Claims

1. Tooling machine with tool revolver with
- a housing (10) connected with the tooling machine,
- an electric drive motor (28),
- a tooling disc (14) rotatably positioned around a longitudinal axis (34) to the housing (10) that can fitted in selectable angel positions, as well as take-ups (16) for the processing tools (18),
- whereby at least one rotating processing tool (18) can be driven by the drive motor (28) via the shafts (24, 30) that extend vertical to the longitudinal axis (34) and represent the tilt axis for the tooling disc (14),
**characterised in that** the electric drive motor (28) is located inside the tooling disc (14), and **in that** the output shaft (30) of the electric drive (28) is aligned flush with the drive shaft (24) of the processing tool (18) or extends parallel to the same.

2. Tooling machine according to Claim 1 **characterised in that** the electric drive motor (28) is preferably an asynchronous motor or a 3-phase synchronous motor, preferably in the form of an internal impeller motor, where the stator that is connected with the housing (10) of the motor (28) encloses the rotor and the magnetic components with the coil windings, the same being connected with the output shaft (30) of the electric drive motor (28).

3. Tooling machine according to Claim 1 or 2, **characterised in that** at least one gearbox reducing the rotation speed of the drive motor (28), preferably a single- or multi-stage planetary gearbox (42, 56), is located between the output shaft (30) of the electric drive motor (28) and the drive shaft (24) of the processing tool (18).

4. Tooling machine according Claim 3, **characterised in that** the drive gear (44) of the planetary gearbox (42) can be driven by the output shaft (30) of the electric drive motor (28), **in that** the drive gear (44) drives at least one planetary gear (48) that rolls off along a fixed-annular gearbox housing (46), and **in that** the relevant planetary gear (48) transmits the drive (54) created by the rotation of the relevant planetary gear (48) to the drive shaft (24) of the processing tool (18) via a follower (52).

5. Tooling machine according Claim 4, **characterised in that** a further planetary gearbox (56) is envisaged, the drive gear (44) of which can be driven by the output (54) of the first planetary gearbox (42), and the output (60) of which that is created by the rotation movement of its relevant planetary gear (48) drives the drive shaft (24) of the relevant processing tool (18).

6. Tooling machine according to one of the Claims 1 to 5, **characterised in that** a coupling means (62) is envisaged between the output shaft (30) of the drive motor (28) or the shaft-like output (54 or 60) of the relevant planetary gearbox (42, e.g. 56) located last prior to the drive shaft (24) of the processing tool (18).

7. Tooling machine according Claim 6, **characterised in that** the coupling means (62) can be controlled by means of a hydraulic or pneumatic activating means (64), and drives the drive shaft (24) of the same in the coupled or de-coupled position for rotatably driving the processing tool (18), e.g. for releasing the processing tool (18) by means of tilting movement of the tooling disc (14).

8. Tooling machine according to one of the Claims 1 to 7, **characterised in that** the electric drive motor (28) is positioned stationary on a housing-like support (90), around which the tooling disc (14) with its take-ups (16) is tiltably positioned.

9. Tooling machine according Claim 8, **characterised in that** the electric drive motor (28) can be cooled by means of a cooling means (92), the coolant lines (94) of which extend through the support (90) of the housing (10).

10. Tooling machine according Claim 8 or 9, **characterised in that** the supply lines (96) for the activating means (64) extend at least in part through the support (90) of the housing (10) as well as the lines (100) for an end position control (98) of the coupling (62) and/or activating means (64).

## Revendications

1. Machine-outil avec une tourelle porte-outils comprenant
- un carter (10) assemblé avec la machine-outil,
- un moteur (28) électrique d'entraînement,
- un disque (14) porte-outils qui est monté tournant par rapport au carter (10) autour d'un axe (34) longitudinal et qui peut être fixé en des positions angulaires pouvant être choisies et qui a des logements (16) pour des outils (18) d'usinage,
- dans lequel au moins un outil (18) d'usinage tournant peut être entraîné par le moteur (28) d'entraînement par l'intermédiaire d'arbres (24, 30) qui sont perpendiculaires à l'axe (34) longitudinal représentant l'axe de pivotement du disque (14) porte-outils,
**caractérisée en ce que** le moteur (28) électrique d'entraînement est disposé à l'intérieur du disque (14) porte-outils et **en ce que** l'arbre (30) de sortie de l'entraînement (28) électrique est aligné avec l'arbre (24) d'entraînement de l'outil (18) d'usinage ou lui est parallèle.

2. La machine-outil suivant la revendication 1, **caractérisée en ce que** la moteur (28) électrique d'entraînement est de préférence un moteur asynchrone ou un moteur synchrone triphasé, constitué de préférence sous la forme d'un moteur à rotor intérieur, dans lequel le stator assemblé au carter (10) du moteur (28) et ayant les enroulements de bobine entoure le rotor ayant les parties d'aimant et assemblé à l'arbre (30) de sortie du moteur (28) électrique d'entraînement.

3. La machine-outil suivant la revendication 1 ou 2, **caractérisée en ce qu'**il y a, entre l'arbre (30) de sortie du moteur (28) électrique d'entraînement et l'arbre (24) d'entraînement de l'outil (18) d'usinage, au moins une transmission réduisant la vitesse de rotation du moteur (28) d'entraînement, de préférence un engrenage épicycloïdal à un étage ou à plusieurs étages.

4. La machine-outil suivant la revendication 3, **caractérisée en ce que** la roue (44) d'entraînement de l'engrenage (42) planétaire peut être entraînée par la roue (30) de sortie du moteur (28) électrique d'entraînement, **en ce que** la roue (44) d'entraînement entraîne au moins une roue (48) planétaire qui roule respectivement le long d'un carter (46) d'engrenage annulaire fixe et **en ce que** le roue (48) planétaire respective transmet par une partie (52) formant entraîneur, à l'arbre (24) d'entraînement de l'outil (18) d'usinage, la sortie (54) se créant lorsque la roue (48) planétaire respective tourne.

5. La machine-outil suivant la revendication 4, **caractérisée en ce qu'**il est prévu un autre engrenage (56) planétaire dont la roue (44) d'entraînement peut être entraînée par la sortie (54) du premier engrenage (42) planétaire et dont la sortie (60), se créant lorsque sa roue (48) planétaire respective tourne, entraîne l'arbre (24) d'entraînement de l'outil (18) d'usinage.

6. La machine-outil suivant l'une des revendications 1 à 5, **caractérisée en ce qu'**il est prévu un dispositif (62) d'accouplement entre l'arbre (30) de sortie du moteur (28) d'entraînement ou la sortie (54 ou 60) du type arbre de l'engrenage (42 ou 56) planétaire disposé respectivement en dernier avant l'arbre (24) d'entraînement de l'outil (18) d'usinage.

7. La machine-outil suivant la revendication 6, **caractérisée en ce que** le dispositif (62) d'accouplement peut être commandé par un dispositif (64) hydraulique ou pneumatique d'actionnement et, dans la position couplée ou découplée, entraîne, pour un entraînement en rotation de l'outil (18) d'usinage, son arbre (24) d'entraînement ou, pour une opération de pivotement de l'outil (18) d'usinage au moyen du disque (14) porte-outils le libère.

8. La machine-outil suivant la revendication 1 à 7, **caractérisée en ce que** le moteur (28) électrique d'entraînement est monté fixe sur un appui (90) du type carter autour duquel le disque (14) porte-outils avec ses logements (16) est monté pivotant.

9. La machine-outil suivant la revendication 8, **caractérisée en ce que** le moteur (28) électrique d'entraînement peut être refroidi par un dispositif (82) de refroidissement, dont les conduits (14) de refroidissement passent dans l'appui (90) du carter (10).

10. La machine-outil suivant la revendication 8 ou 9, **caractérisée en ce que** les lignes (96) d'alimentation du dispositif (64) d'actionnement s'étendent au moins en partie dans l'appui (90) du carter (10) tout comme les lignes (100) pour un contrôle (98) de position finale du dispositif (62) d'accouplement et/ou du dispositif (64) d'actionnement.
